# EUROPÄISCHE PATENTANMELDUNG

(11) **EP 4 778 832 A1**
(43) Veröffentlichungstag der Anmeldung: **22.07.2026**
(21) Anmeldenummer: 26150584.6
(22) Anmeldetag: 07.01.2026
(51) Int. Cl.: B64D 1/22, B25J 15/00, B65G 61/00

(54) **PAKETGREIFERVORRICHTUNG FÜR EINE DROHNE**

(30) Priorität: 15.01.2025 DE 202025100189 U
(71) Anmelder: J.D. Geck GmbH, 58752 Altena (DE)
(72) Erfinder: Dobrinsky, Maik, 58762 Altena (DE); Wesemann, Andreas, 58513 Lüdenscheid (DE)
(74) Vertreter: Tarvenkorn, Oliver

(57) **Zusammenfassung**

Paketgreifervorrichtung (100) mit wenigstens:
- einem Basiselement (16) zur Verbindung mit einer Drohne oder mit einem Manipulator;
- einem Gestell (10), das mit dem Basiselement (16) verbunden ist und das einen Aufnahmeraum für ein zumindest abschnittsweise quaderförmiges Paket (1) umgibt;
- zwei zueinander parallelen und voneinander beabstandeten Paketgreiferachsen (22), die jeweils schwenkbar in einem unteren Bereich des Gestells (10) gelagert sind, wobei an jeder Paketgreiferachse (22) wenigstens ein Paketgreiferelement (21) mit einer Greiferaufstandsfläche zur Aufnahme eines Paketbodens (4) befestigt ist;
- je ein Seitenführungselement an jeder Seite zur Führung der sich parallel zur Paketgreiferachse (22) erstreckenden Seitenflächen des Pakets (1) und
- wenigstens einem elastischen Spannelement (30), das mit den Paketgreiferelementen (21) zur Erzeugung eines Drehmoments in Bezug auf die Paketgreiferachse (22) gekoppelt ist.

## Beschreibung

Die Erfindung betrifft eine Paketgreifervorrichtung für eine Drohne mit den Merkmalen des Oberbegriffs des Anspruchs 1 sowie ein Paketgreifersystem mit einer solchen Paketgreifervorrichtung.

Bei Drohnen handelt es sich um umbenannte fliegende Objekte (*unmanned aerial vehicle -* UAV). Bei ziviler Nutzung werden sie u.a. zum Transport von Gegenständen zu entlegenen Positionen genutzt, z.B. zum Transport von Medikamenten auf Siedlungen auf Inseln, wo ein Transport per Schiff zu langwierig und per Flugzeug oder Helikopter außerhalb akut lebensbedrohender Notfälle zu teuer wäre. Mit "Drohne" wird im allgemeinen Sprachgebrauch ein Quadracopter bezeichnet. Durch die vier symmetrisch angeordneten Rotoren sind diese Drohnen sehr beweglich und auch bei Wind gut steuerbar. Alle Flugmanöver sind allein durch elektronische Abstimmung der Drehrichtungen der Rotoren durchführbar und erfordern keine komplizierte Mechanik wie bei einem Hubschrauber.

Beim Transport von Außenlasten, sogenannten Payloads, muss eine sichere Befestigung der Last im Flug gewährleistet sein. Außerdem müssen die Aufnahme und das Absetzen der Last schnell und einfach durchführbar sein.

Es sind Paketgreifervorrichtungen bekannt, beispielsweise aus der CN117885128A, die zwei zueinander gewandte Greifer besitzen, mit denen die Seitenwände eines Transportbehälters gegeneinander gedrückt werden. Somit ist der Transportbehälter nur reibschlüssig gesichert. Außerdem werden die Greifer über Stellmotoren bewegt, so dass zusätzliches Gewicht bewegt werden muss, welche das Payload begrenzt, und es wird elektrische Antriebsenergie aus dem Energiespeicher benötigt, was die Flugzeit reduziert.

In der WO 2018 072 654 A1 ist eine Paketgreifervorrichtung für eine Drohne beschrieben, die vier Greifarme mit je einem abgewickelten Ende besitzt. Diese Enden greifen unter die Last, so dass eine formschlüssige Sicherung gegen Herunterfallen gegeben ist. Allerdings wird eine spezielle Transportverpackung benötigt, die je Greiferarm einen Rücksprung in der Seitenwand aufweist. Nur die dort eingreifenden Greiferarme sichern die Last gegen Herausrutschen in seitliche Richtung.

Die Aufgabe der Erfindung besteht somit darin, eine leichte und einfach bedienbare Paketgreifervorrichtung für eine Drohne anzugeben, die es ermöglicht, quaderförmige Gegenstände ohne spezielle Transportverpackung zu transportieren und für diese eine Sicherung in allen drei räumlichen Koordinaten vorzusehen.

Diese Aufgabe wird durch eine Paketgreifervorrichtung für eine Drohne mit den Merkmalen des Anspruchs 1 gelöst.

Auch wenn der einfache und leichtgewichtige Aufbau insbesondere für die Verwendung beim Lufttransport vorteilhaft ist, ist eine Verwendung der erfindungsgemäßen Paketgreifervorrichtung mit stationären Manipulatoren, wie beispielsweise einem Roboter, ebenso möglich.

Mit "Paket" werden im Sinne der vorliegenden Erfindung alle insbesondere quaderförmigen oder zumindest abschnittsweise quaderförmigen Verpackungen und Behälter bezeichnet. Ein Vorteil der Erfindung liegt darin, dass normale Verpackungen aus Karton nutzbar sind, die ggf. als Witterungsschutz in Kunststofffolie eingeschweißt sind. Es ist aber nicht zwingend erforderlich, dass die Transportverpackung besonders steif ausgebildet ist. Damit entfällt die Bereitstellung spezieller Transportbehälter und ein umständliches Umverpacken vor und nach dem Flug.

Eine Sicherung erfolgt nach der Erfindung bevorzugt über elastische Spannmittel, insbesondere über Gummistropps und Gepäckspanner mit endseitigem Haken. Diese drücken dadurch, dass sie über die oberen Seitenkanten des Pakets geführt sind, das aufgenommene Paket von oben auf die unten angeordneten Paketgreiferelemente. Damit wird nicht nur eine Sicherung des Pakets erreicht, sondern auch eine automatische Anpassung an verschiedene Höhen des geladenen Pakets ermöglicht.

Erfindungswesentlich ist, dass die Paketgreiferelemente als Paar so angeordnet und ausgebildet sind, dass sie im Ausgangszustand zueinander weisende Greiferkanten haben, die so weit nach außen wegschwenken können, dass ein Paket von unten dazwischen hochschiebbar ist und dass sie durch die Spannelemente nach der Aufnahme eines Paketes selbststätig in die Ausgangslage zurückkehren, wobei sie sich zumindest mit einem vorspringenden Abschnitt unterhalb des Paketbodens befinden.

Das Grundprinzip der Erfindung kann also in verschiedenen Formen durch zwei zueinander parallele und voneinander beabstandete Paketgreiferachsen verwirklicht werden, die schwenkbar in einem unteren Bereich des Gestells gelagert sind, wobei an jeder Paketgreiferachse wenigstens ein Paketgreiferelement mit einer Greiferaufstandsfläche zur Aufnahme eines Bodens des Pakets befestigt ist.

Dieses Prinzip ist besonders einfach und kostengünstig durch ein Winkelprofil realisierbar. Dabei sind die Greiferaufstandsfläche zur Aufnahme des Bodens des Pakets und auch das Seitenführungselement jeweils durch ein winkelförmiges Paketgreiferelement gebildet, das mit der Paketgreiferachse verbunden ist und das einen vertikalen Schenkel als Seitenführungselement und einen horizontalen Schenkel als Greiferaufstandsfläche besitzt.

Die winkelförmigen Paketgreiferelemente sind in einer Ausgangsstellung vor Aufnahme eines Paketes so ausgerichtet, dass ein jeweiliger unterer Schenkel horizontal ausgerichtet ist und ein sich daran anschließender, oberer Schenkel vertikal ausgerichtet ist.

Diese Stellung wird zum einen durch elastische Spannelemente gehalten, die eine Zugkraft auf die Paketgreiferelemente ausüben und so ein Drehmoment in Bezug auf die Paketgreiferachse erzeugen, dass die sich gegenüberliegenden Paketgreiferelemente aufeinander zu kippen und zugleich wird durch die elastische Vorspannung der Paketgreiferelemente mittels der Spannelemente verhindert, dass die Paketgreiferelemente nach außen wegkippen.

Zum anderen werden die Paketgreiferelemente durch Hebel gehalten, die fest mit den Paketgreiferachsen verbunden sind und die sich mit ihren Enden am Gestell abstützen, womit eine jeweils gegenteilige Drehrichtung der Paketgreiferelemente begrenzt ist. Neben Winkelprofilen sind auch andere Querschnittsformen für die Paketgreiferelemente denkbar, beispielweise ein Rundprofil, bei dem ein Sektor von ca. 90° ausgenommen ist. Möglich ist auch, die seitliche Abstützung durch vertikal ausgerichtete Profile unabhängig von zusätzlichen horizontalen Profilen, die als Auflager vorgesehen sind, auszubilden. Die Integration beider Funktionen in einem Winkelprofil ist aber in den meisten Fällen einfacher realisierbar.

Die Spannelemente sind vorzugsweise als lineare elastische Spannelemente gebildet, z. B. in Form von Gummispannseilen, und können zur schnellen Befestigung mit Haken, Schäkel oder Karabinern an jedem Ende versehen sein, die in Ösen eingreifen.

Mit Vorteil erstreckt sich wenigstens ein Spannelement von einem Paketgreiferelement zum anderen, indem es seinen beiden Enden an den beiden sich gegenüberliegenden Paketgreiferelementen befestigt wird und über ein Umlenkelement im oberen Bereich des Gestells, insbesondere über ein Umlenkelement an einer Unterseite eines Basiselements geführt. Durch die Verwendung eines oder mehrere Spannelemente, die sich jeweils zwischen dem Paar von Paketgreiferelementen erstrecken, wird eine gleichmäßige Vorspannkraft auf beide Paketgreiferelemente erzielt.

Vorteilhaft bei der Umlenkung der Spannelemente über einen oben am Aufnahmeraum vorgesehenen Umlenkpunkt ist, dass eine vertikale Kraftkomponente der vorgespannten Spannelemente dafür sorgt, dass das Paket auf die Auflager an den Paketgreiferelementen drückt.

Zur Anpassung an Pakete mit unterschiedlicher Höhe ist es vorteilhaft, den Umlenkpunkt für das Spannelement höhenverstellbar auszubilden oder ein zusätzliches Element vorzusehen, dass beide Abschnitte des Spannelements einschließt und dadurch den Winkel der auf die Paketgreiferelement wirkenden Zugkraft an die Pakethöhe anpasst., damit auch flachere Pakete von oben auf die Paketgreiferelemente gedrückt und darauf gehalten werden.

Die erfindungsgemäße Paketgreifervorrichtung ist in einer bevorzugten Ausführungsform sehr einfach und kostengünstig aufgebaut. Das Gestell, das räumlich ausgebildet ist, so dass es sich in allen drei Raumrichtungen um einen Aufnahmeraum für ein Paket herum erstreckt. Es kann z. B. aus Standard-Aluminiumprofilabschnitten hergestellt werden, wozu allenfalls angepasste Knotenelemente zu deren Verbindung erforderlich sind. Eine besonders leichtgewichtige Ausführungsform wird durch Elemente aus Carbon erreicht.

Der Aufnahmeraum ist ein imaginäres freies Volumen innerhalb des Gestells, dessen maximale Ausdehnung im Grundriss durch den Abstand zwischen den Paketgreiferelementen, dem lichten Abstand zwischen den Seitenstreben des Gestells und in der Höhe durch den Abstand zwischen einer Bodenaufstandsebene des Gestells und der Unterseite des Basiselements begrenzt ist.

Das Basiselement zur Verbindung mit einer Drohne oder mit einem andersartigen Manipulator ist vorzugweise eine Kunststoff- oder Aluminiumplatte, die vorgefertigte Bohrungen enthält, um eine einfache Anbringung, beispielsweise an marktübliche Quadrocopertypen, zu ermöglichen.

Eine weitere vorteilhafte Ausführungsform sieht vor, dass das Gestell die Struktur eines Pyramidenstumpfes mit einer großen Aufstandsfläche besitzt, die sich zum Basiselement hin verjüngt. Damit wird zum einen im seitlichen unteren Bereich ausreichend Platz für die Lagerung der Paketgreiferachsen geschaffen. Zum anderen wird über das Gestell eine breite Abstützfläche in der Bodenaufstandsebene geschaffen, die sowohl das Beladen erleichtert wie auch das sichere Landen einer Drohne, an der die Paketgreifervorrichtung befestigt ist.

Vorzugsweise ist das Gestell durch wenigstens vier Schrägstreben und einen rechteckigen Rahmen mit Seitenstreben gebildet, wobei die Schrägstreben und die Seitenstreben über vorgefertigte Knotenelemente miteinander verbunden sind und die Schrägstreben über Knotenelemente mit dem Basiselement verbunden sind. Hierdurch wird eine leichte, stabile und kostengünstige Konstruktion geschaffen.

Zur weiteren Vereinfachung der Herstellung ist bevorzugt vorgesehen, dass an den unteren Knotenelementen je eine Lageraufnahme für die schwenkbare Paketgreiferachse ausgebildet ist. Damit entfallen gesonderte Lageraufnahmen. Die Montagezeit wird reduziert, da die Lageraufnahmen direkt bei der Montage des Gestells präzise zueinander positioniert sind.

Vorteilhaft kann sein, wenn die Paketgreiferachsen jeweils mit wenigstens einem Hebel verbunden sind, der in wenigstens einer Endstellung der Paketgreiferachse am Gestell anliegt, insbesondere an einer Seitenstrebe, die Teil des unteren Basisrahmens ist, aber ggf. auch an einer der Schrägstreben, um die Bewegung der Paketgreiferachse in die andere Richtung zu begrenzen. Durch die Anlage an den Seitenstreben wird der Winkel begrenzt, mit dem die Paketgreiferelemente nach innen, also aufeinander zu, kippen können. Vorzugsweise ist der Anschlagpunkt dieser Hebel am Gestell in irgendeiner Weise derart verstellbar gegenüber der Paketgreiferachse, dass eine Feinjustierung der Winkel-Endlage der Paketgreiferachsen möglich ist. Über Länge und Winkel der Hebel kann dann beispielsweise auch eingestellt werden, inwieweit eine Klemmung der Seitenwände eines aufgenommenen Pakets durch die Paketgreiferelemente und die Spannelemente zugelassen wird oder nicht.

Die elastischen Spannelemente sind vorzugsweise durch Gummispannelemente mit je einem Haken am Ende gebildet, die vorgefertigt in verschiedenen Längen verfügbar sind. Bei Verwendung solcher Spannelemente sind vorzugsweise Aufnahmeösen zum Einhaken der Haken im Bereich einer Oberkante des jeweiligen oberen Schenkels des Paketgreiferelements angebracht oder ausgebildet.

Die erfindungsgemäße Paketgreifervorrichtung kann in der Weise genutzt werden, dass sie von oben auf ein am Boden auf einem schmalen Podest stehendes Paket gestülpt wird. Die Paketgreiferelemente schwenken zur Aufnahme zunächst selbststätig nach außen, während das Paket sie passiert und schwenken dann von selbst zurück, so dass sie unter den Paketboden greifen.

Als sinnvolle Weiterbildung kann ein Paketgreifersystem vorgesehen sein, das neben wenigstens einer erfindungsgemäßen Paketgreifervorrichtung zusätzlich eine Bestückungsvorrichtung umfasst, auf die die Paketgreifervorrichtung mit ihrem Gestell aufsetzbar ist. Die Bestückungsvorrichtung umfasst wenigstens je einen vertikal verschiebbaren Betätigungsstift für jedes Paketgreiferelement, um diese gegen die von den Spannelementen ausgeübte Zugkraft nach außen zu schwenken. Eine Hubbühne in der Bestückungsvorrichtung führt von unten ein Paket heran und hält dieses so lange, bis die Paketgreiferelemente unter den Paketboden gegriffen haben.

Die Erfindung wird nachfolgend mit Bezug auf das in den Zeichnungen dargestellte Ausführungsbeispiel näher erläutert. Die Figuren zeigen im Einzelnen:
- Fig. 1: eine Paketgreifervorrichtung mit einem aufgenommenen Paket in perspektivischer Darstellung;
- Fig. 2 bis 5A: jeweils einen Querschnitt durch die Paketgreifervorrichtung von vorn, in verschiedenen Stadien der Aufnahme eines Pakets;
- Fig. 5B: eine Vergrößerung aus Fig. 5A;
- Fig. 6 und 7: einen Querschnitt durch die Paketgreifervorrichtung von vorn, jeweils in verschiedenen Stadien der Aufnahme eines Pakets;
- Fig. 8: einen Querschnitt durch eine zur Aufnahme niedriger Pakete angepasste Paketgreifervorrichtung und
- Fig. 9: einen Querschnitt durch eine Paketgreifervorrichtung beim Überstülpen auf ein Paket von oben.

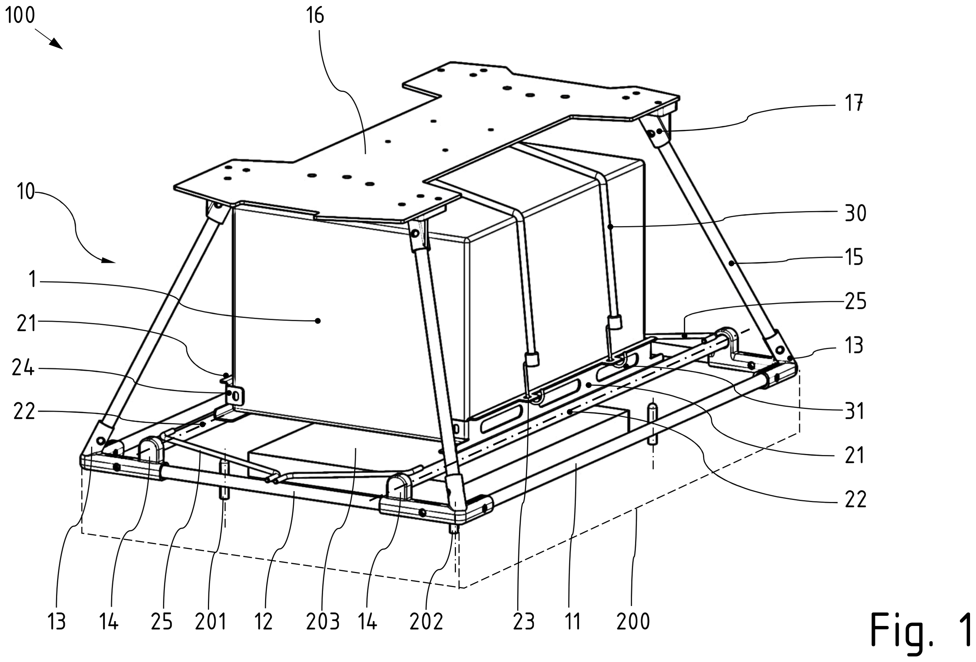

Figur 1 zeigt eine Paketgreifervorrichtung 100 mit einem aufgenommenen Paket 1 in perspektivischer Darstellung. Die Paketgreifervorrichtung 100 besitzt an ihrer Oberseite ein Basiselement 16, über welches die Paketgreifervorrichtung 100 mit einem beweglichen Transportmittel, wie beispielsweise einer Drohne, oder mit einem Manipulator, wie beispielsweise einem Roboter, zu verbinden ist.

An die Unterseite des Basiselements 16 schließt sich ein räumliches Gestell 10 an, das durch vier Schrägstreben 15 und einen rechteckigen Rahmen mit Seitenstreben 11, 12 gebildet ist. Die Streben 11, 12, 15 sind über vorgefertigte Knotenelemente 13 miteinander verbunden, und die Schrägstreben 15 sind über weitere Knotenelemente 17 mit dem Basiselement 16 verbunden. Das Gestell 10 hat die Struktur eines Pyramidenstumpfes mit einer großen Bodenaufstandsfläche, die sich zum Basiselement 16 hin nach oben verjüngt.

Die Knotenelemente 13 an den unteren Eckpunkten besitzen zugleich je ein Lager 14 für eine Paketgreiferachse 22. Im Gestell 10 sind zwei parallele Paketgreiferachsen 22 vorgesehen. Die Paketgreiferachsen 22 sind in ihren jeweiligen Endbereichen mit Hebeln 25 versehen, die jeweils an einem Ende abgewinkelt sind und mit dem abgewinkelten Ende auf den Seitenstreben 12 aufliegen. Dadurch ist der mögliche Schwenkwinkel der Paketgreiferachsen 22 formschlüssig begrenzt.

Jede Paketgreiferachse 22 ist mit einem Paketgreiferelement 21 verbunden, welches winkelförmig ausgebildet ist. Spannelemente 30 in Form von elastischen Gummispannseilen mit Haken 31 sind an der Unterseite des Basiselements 16 befestigt oder über einen dort angebrachten Umlenkpunkt geführt. Sie greifen in Aufnahmepunkte an den Paketgreiferelementen 21 ein.

Die Paketgreiferelemente 21 besitzen an einer oberen Kante wenigstens eine Öse 23 zur Aufnahme der Haken 31. In beiden Endabschnitten besitzen die Paketgreiferelemente 21 jeweils einen abgewinkelten Vorsprung 24, der eine formschlüssige Sicherung des Pakets 1 in Längsrichtung der Paketgreiferachsen 22 bewirkt.

Die Paketgreifervorrichtung 100 steht auf einer Bestückungsvorrichtung 200, die vier in Eckbereichen angeordnete, axial verschiebbare Betätigungsstifte 201, 202 und eine vertikal bewegliche Hubbühne 203 unterhalb des Pakets 1 umfasst.

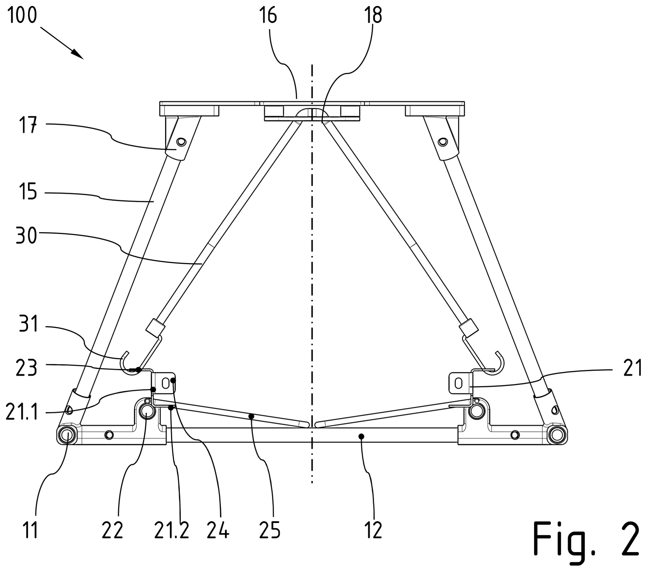

Die Aufnahme eines Pakets 1 durch die Paketgreifervorrichtung 100 wird nachfolgend unter Bezug auf die Figuren 2 bis 7 erläutert. Diese geben jeweils eine Schnittansicht von vorn wieder, wobei sich nur die Lage der Paket-greiferelemente 21 und des Pakets 1 relativ zu der Paketgreifervorrichtung 100 ändert.

In Figur 2 ist der Ausgangszustand einer leeren Paketgreifervorrichtung 100 dargestellt. Die winkelförmigen Paketgreiferelemente 21 sind so ausgerichtet, dass ein jeweiliger unterer Schenkel 21.2 horizontal ausgerichtet ist und ein sich daran anschließender, oberer Schenkel 21.1 vertikal ausgerichtet ist. Diese Stellung wird zum einen durch die elastischen Spannelemente 30 und zum anderen durch die Hebel 25 gehalten, die fest mit den Paketgreiferachsen 22 verbunden sind und mit ihren Enden auf der Seitenstrebe 12 aufliegen. Durch die elastische Vorspannung der Spannelemente 30 wird verhindert, dass die Paketgreiferelemente 21 nach außen wegkippen. Eine jeweils gegenteilige Drehrichtung der Paketgreiferelemente 21 wird dadurch verhindert, dass die Hebel 25 mit ihrem abgewinkelten Ende auf den Seitenstreben 12 aufliegen. Die Spannelemente 30 sind in Form von Gummispannseilen mit Haken 31 an jedem Ende gebildet. Sie sind an einer Aufhängung 18 an der Unterseite des Basiselmenets 16 umgelenkt.

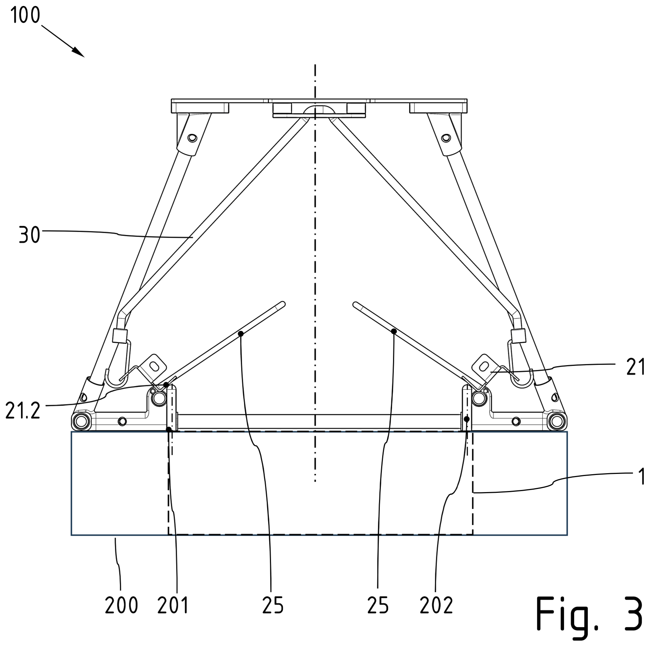

Um die Aufnahme eines Paketes 1 vorzubereiten, wird die Paketgreifervorrichtung 100 auf einer stationären Bestückungsvorrichtung 200 platziert, wie in Fig. 3 angedeutet. Von der Bestückungsvorrichtung 200 aus werden Betätigungsstifte 201, 202 vertikal nach oben ausgefahren, die unter die horizontalen 21.2 der Paketgreiferelemente 21 greifen, welche jeweils eine Greiferaufstandsfläche bilden, und diese gegen die von den vorgespannten Spannelementen 30 ausgeübte Zugkraft hochdrücken. Zugleich kann von unten das Paket 1 herangeführt werden. Die Betätigungsstifte 201, 202 befinden sich in Längsrichtung gesehen außerhalb der Paketgreiferelemente 21 und kollidieren daher nicht mit dem Paket 1.

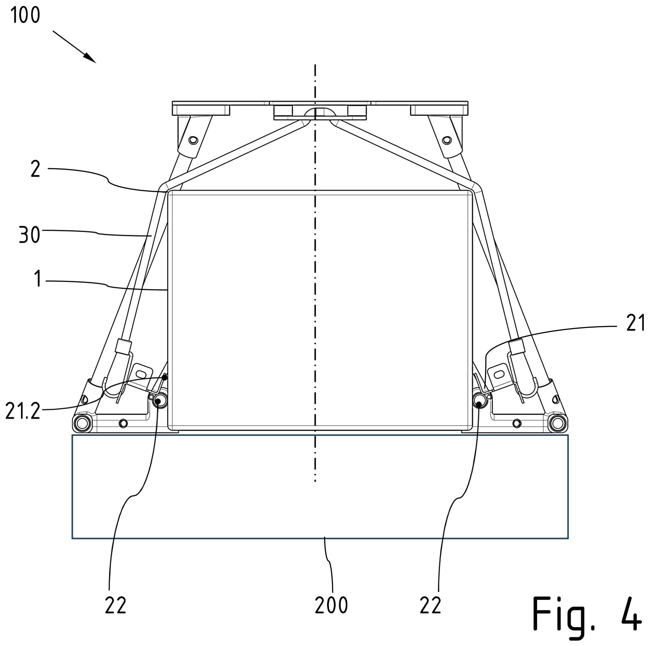

Bei der Stellung, die in Figur 4 gezeigt ist, ist ein Paket 1 bereits so weit mittels eines Hubelements der Bestückungsvorrichtung 200 von unten in einem von dem Gestell 10 umgebenen Aufnahmeraum eingeführt und hochgeschoben worden, dass es mit seinen oberen Seitenkanten 2 an den Spannelementen 30 anliegt. Im unteren Bereich ist es mit seinen Seitenflächen zwischen den Paketgreiferachsen 22 geführt. Die Betätigungsstifte halten die dargestellte, gekippte Position der Paketgreiferelemente 21, sind aber in der Abbildung gemäß Figur 4 von dem Paket 1 verdeckt. Durch die gekippte Position kann das Paket 1 frei zwischen den horizontalen Schenkeln 21.2 der Paketgreiferelemente 21 hindurch hochgeschoben werden.

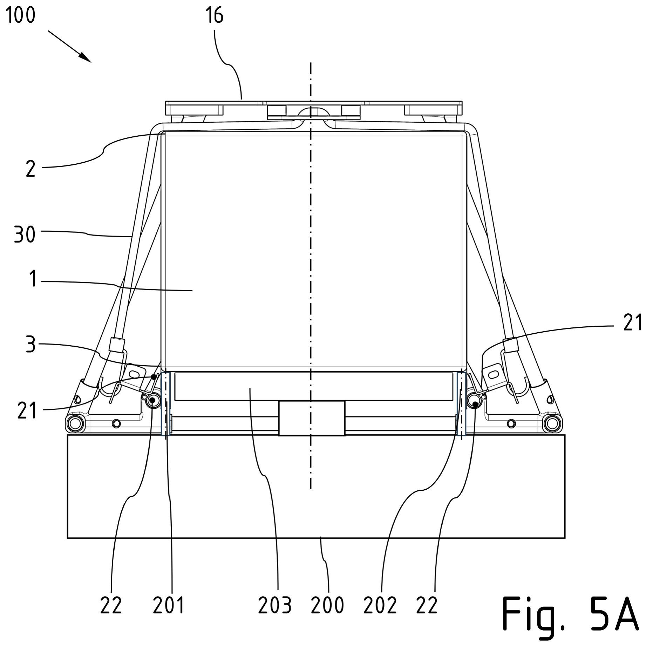

Im nächsten Schritt der Positionierung des Pakets 1, welcher in Figur 5A illustriert ist, ist das Paket 1 so weit angehoben worden, dass die Spannelemente 30 maximal gespannt sind und das Paket 1 von unten bis an das Basiselement 16 herangeführt worden ist. Die beiden unteren Seitenkanten 3 des Pakets 1 befinden sich kurz oberhalb der jeweiligen Enden der winkelförmigen Paketgreiferelemente 21. Das Paket 1 wird durch ein Hubelement 203 der Bestückungsvorrichtung 200 in der Lage gehalten, während die Betätigungsstifte 201, 202 zurückgezogen werden.

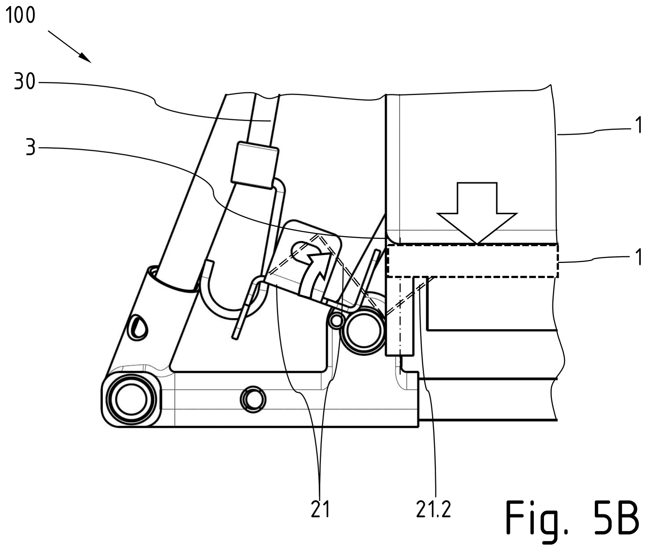

Figur 5B ist eine Vergrößerung des Bereichs links unten aus Fig. 5A, mit der das Prinzip des Paketgreifens verdeutlich werden soll: das Paket 1 muss in einem Stadium des Bestückungsvorgangs so weit hoch geschoben worden sein, dass es mit seiner unteren Seitenkante 3 vollkommen frei von dem Paketgreiferelement 21 kommt. Dies entspricht den Positionen des Paketgreiferelements 21 und des Pakets 1, die durch die ausgezogenen Linien dargestellt sind. Wurde dieser Punkt erreicht, so schnellen die Paketgreiferelemente 21 aufgrund der Zugkraft der Spannelemente 30 zurück in ihre Ausgangslage, wobei die Paketgreiferelemente 21 nach innen zurückschwenken. Ein Zwischenstadium des Paketgreiferelements 21 ist durch den gestrichelten Doppelwinkel angedeutet. Zugleich kann das Paket 1 in die mit gestrichelten Linien gekennzeichnete Position absacken, so dass es sich im Bereich seiner unteren Seitenkanten 3 auf den Schenkeln 21.2 der Paketgreiferelemente 21 ablegt.

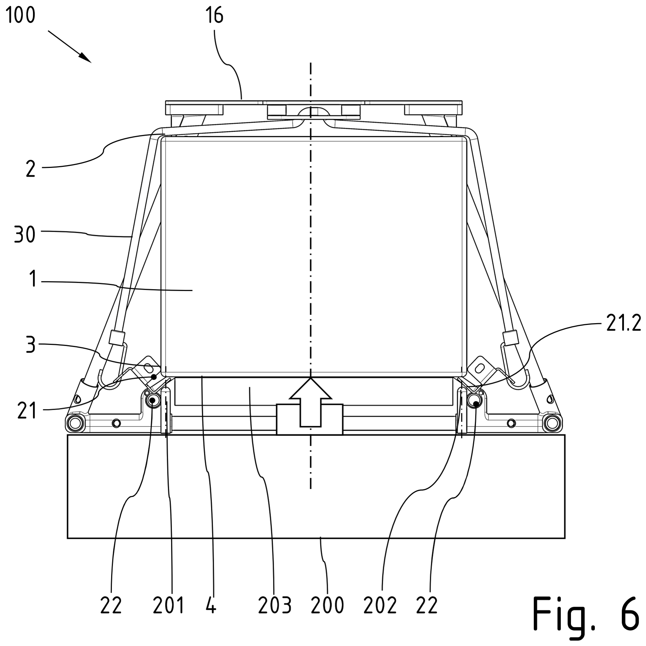

In Figur 6 befinden sich die Betätigungsstifte 201, 202 bereits deutlich unterhalb eines Paketbodens 4. Während das Paket 1 noch durch das Hubelement 203 in der obersten Position gehalten wird, sind die Paketgreiferelemente 21 bereits aufgrund der von den Spannelementen 30 ausgeübten Zugkraft zurückgeschwenkt, wobei sich die unteren Schenkel 21.2 des Winkelprofils, welches die Paketgreiferelemente 21 bildet, unter den Paketboden 4 bewegen. Die Positionen von Paket 1 und Schenkel 21.2 entsprechen in der Darstellung der Fig. 6 denen der gestrichelten Darstellung in Fig. 5B.

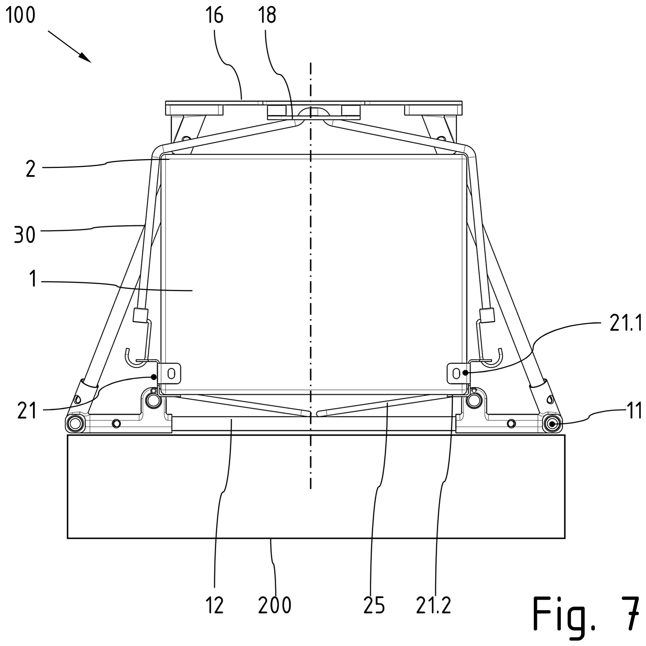

In Figur 7 ist das Endstadium des Paketaufnahmevorgangs dargestellt. Sowohl die Betätigungsstifte wie auch das Hubelement sind nach unten in die Bestückungsvorrichtung 200 zurückgezogen. Das Paket 1 ist etwas nach unten gesackt, sodass es auf den unteren, horizontalen Schenkeln 21.2 der Paketgreiferelemente 21 aufliegt. Die sich anschließenden vertikalen Schenkel 21.1 liegen an den Seitenflächen des Pakets 1 an. Durch eine Anlage der Schenkel 21.1 an die Seitenflächen kann das Paket 1 zusätzlich geklemmt werden. Das Paket 1 wird dadurch auf den Paketgreiferelementen 21 gehalten, dass die Spannelemente 30 über die oberen Seitenkanten 2 des Pakets 1 hinweg zu der Aufhängung 18 geführt sind, sodass eine vertikale Kraftkomponente der vorgespannten Spannelemente 30 dafür sorgt, dass das Paket 1 während des Transports in Berührung mit den horizontalen Schenkeln 21.2 der Paketgreiferelemente 21 bleibt.

Über Länge und Winkel der Hebel 25 kann vorgegeben werden, inwieweit eine Klemmung der Seitenwände des Pakets 1 durch die Schenkel 21.1 zugelassen wird. Bei empfindlichen Verpackungen kann vorgesehen sein, dass die Paketgreiferelemente 21 jeweils nur exakt in der in Figur 7 dargestellten Lage mit einem genau horizontal ausgerichteten unteren Schenkel 21.2 und einem genau vertikal ausgerichteten oberen Schenkel 21.1 positionierbar sind.

Wird der Hebel 25 jedoch etwas kürzer gestaltet oder längenveränderlich gemacht, können die Paketgreiferelemente 21 über diese Position hinaus um wenige Grad nach innen klappen, sofern kein Paket aufgenommen ist. Das bedeutet andererseits, dass es möglich ist, dass die Schenkel 21.1 mit der Zugkraft der vorgespannten Spannelemente 30 gegen die Seitenflächen eines dazwischen aufgenommenen Pakets 1 gezogen werden können und dieses elastisch verformen.

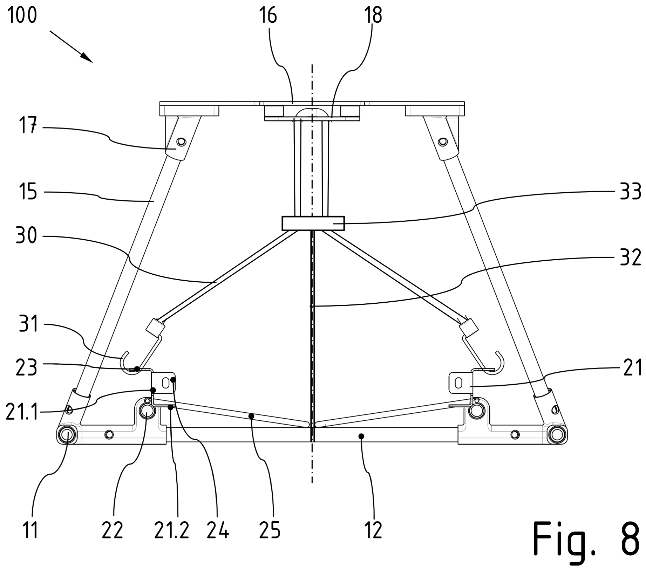

Figur 8 zeigt, wie die Paketgreifervorrichtung 100 auf einfache Weise für die Aufnahme von Paketen, die die gleiche Grundfläche haben, aber flacher sind, angepasst werden kann. Hierzu werden beide Abschnitte jedes Spannelements 30 durch eine Rundkausch 33 geführt, die nach unten durch ein zusätzliches Seil 32 gegenüber den Seitenstreben 11, 12 abgespannt ist. Dadurch wird der zwischen den beiden Enden der Spannelemente 30 eingeschlossene Winkel flacher und so können die Spannelemente 30 auch Pakete mit geringerer Höhe als in den Figuren 3 bis 7 dargestellt vorspannen. Auch flachere Pakete werden somit durch die Spannelemente 30 von oben auf die Paketgreiferelemente 21 gedrückt und darauf gehalten.

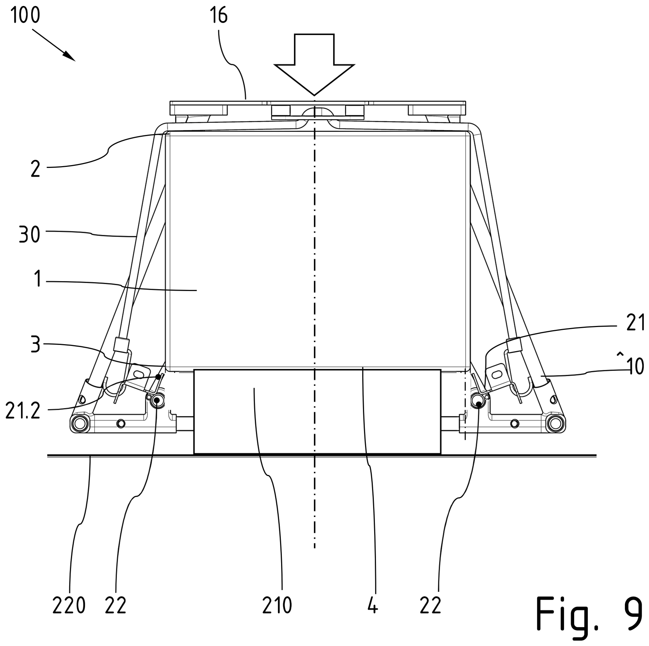

Fig. 9 zeigt einen Querschnitt durch eine Paketgreifervorrichtung 100 beim Überstülpen über ein stehendes Paket 1 von oben. Die Stellung der Paketgreifervorrichtung 100 relativ zum Paket 1 ist identisch zu der in Figur 5A, wo das Paket 1 von unten herangeführt worden ist.

Abweichend davon steht bei dieser Art der Benutzung der ansonsten unveränderten Paketgreifervorrichtung 100 das Paket 1 auf einem ortsfesten Boden 220 stehendes Podest 210, das etwas schmaler als der Paketboden 4 des Pakets 1 ist. Die Paketgreifervorrichtung 100 wird so von oben auf das Paket 1 gedrückt, dass es zunächst zwischen den Paketgreiferachsen 22 geführt ist. Die Paketgreiferelemente 21 schwenken dabei nach außen, wobei die Spannelemente 30 zusätzlich gespannt werden. Sobald die in Figur 9 gezeigte Position erreicht ist, können die Paketgreiferelemente 21 in ihre Ausgangslage zurückkehren, so dass sie mit ihren horizontalen Schenkeln 21.2 unter den Paketboden 4 des Pakets greifen.

Das Niederdrücken des Gestells 10 kann bei leistungsstarken Quadrocoptern durch den eigenen Antrieb bewirkt werden. Im Übrigen können ortsfeste Hilfsmittel vorgesehen sein, die z. B. seitlich auf die Seitenstreben 11, 12 des Gestells 10 drücken.

### Bezugszeichen:

- 1: Paket
- 2: obere Seitenkante
- 3: untere Seitenkante
- 4: Paketboden

- 100: Paketgreifervorrichtung

- 10: Gestell
- 11, 12: Seitenstreben
- 13: Knotenelement
- 14: Lager
- 15: Schrägstrebe
- 16: Basiselement
- 17: Knotenelement
- 18: Aufhängung

- 21: Paketgreiferelement
- 21.1, 21.2: Schenkel
- 22: Paketgreiferachse
- 23: Öse
- 24: Vorsprung
- 25: Hebel

- 30: Spannelement
- 31: Haken
- 32: Seil
- 33: Rundkausch

- 200: Bestückungsvorrichtung
- 201, 202: Betätigungsstifte
- 203: Hubelement
- 210: Sockel

## Patentansprüche

1. Paketgreifervorrichtung (100) mit wenigstens:
- einem Basiselement (16) zur Verbindung mit einer Drohne oder mit einem Manipulator;
- einem Gestell (10), das mit dem Basiselement (16) verbunden ist und das einen Aufnahmeraum für ein zumindest abschnittsweise quaderförmiges Paket (1) umgibt;
- zwei zueinander parallelen und voneinander beabstandeten Paketgreiferachsen (22), die jeweils schwenkbar in einem unteren Bereich des Gestells (10) gelagert sind, wobei an jeder Paketgreiferachse (22) wenigstens ein Paketgreiferelement (21) mit einer Greiferaufstandsfläche zur Aufnahme eines Paketbodens (4) befestigt ist;
- je ein Seitenführungselement an jeder Seite zur Führung der sich parallel zur Paketgreiferachse (22) erstreckenden Seitenflächen des Pakets (1) und
- wenigstens einem elastischen Spannelement (30), das mit den Paketgreiferelementen (21) zur Erzeugung eines Drehmoments in Bezug auf die Paketgreiferachse (22) gekoppelt ist.

2. Paketgreifervorrichtung (100) nach Anspruch 1, **dadurch gekennzeichnet, dass** an beiden Paketgreiferachsen (22) die Greiferaufstandsfläche zur Aufnahme des Paketbodens (4) und das Seitenführungselement durch ein winkelförmiges Paketgreiferelement (21) gebildet sind, das mit der Paketgreiferachse (22) verbunden ist und das einen vertikalen Schenkel (21.1) als Seitenführungselement und einen horizontalen Schenkel (21.2) als Greiferaufstandsfläche besitzt.

3. Paketgreifervorrichtung (100) nach Anspruch 1 oder 2, **dadurch gekennzeichnet, dass** das Gestell (10) die Struktur eines Pyramidenstumpfes mit einer großen Aufstandsfläche besitzt, die sich zum Basiselement (16) hin verjüngt.

4. Paketgreifervorrichtung (100) nach Anspruch 3, **dadurch gekennzeichnet, dass** das Gestell (10) durch) und einen rechteckigen Rahmen mit Seitenstreben (11, 12) und wenigstens vier Schrägstreben (15), die sich zwischen dem Rahmen und dem Basiselement (16) erstrecken, gebildet ist.

5. Paketgreifervorrichtung (100) nach Anspruch 4, **dadurch gekennzeichnet, dass** die Schrägstreben (15) und die Seitenstreben (11, 12) über vorgefertigte Knotenelemente (13) miteinander verbunden sind und die Schrägstreben (15) über Knotenelemente (17) mit dem Basiselement (16) verbunden sind.

6. Paketgreifervorrichtung (100) nach Anspruch 5, **dadurch gekennzeichnet, dass** an den Knotenelementen (13, 17) an ihrer Verbindung mit zwei parallelen Seitenstreben (11, 12) je eine Lageraufnahme (14) für eine schwenkbare Paketgreiferachse (22) ausgebildet ist.

7. Paketgreifervorrichtung (100) nach einem der vorhergehenden Ansprüche, **dadurch gekennzeichnet, dass** die Paketgreiferachsen (22) jeweils mit wenigstens einem Hebel (25) verbunden sind, der in wenigstens einer Endstellung der jeweiligen Paketgreiferachse (22) am Gestell (10) anliegt.

8. Paketgreifervorrichtung (100) nach Anspruch 7, **dadurch gekennzeichnet, dass** die Hebel (25) einen verstellbaren Endanschlag aufweisen, mit dem sie in einer Endstellung der Paketgreiferachsen (22) an einer Seitenstrebe (11, 12) des Gestells (10) anliegen, und/oder längenveränderlich ausgebildet sind.

9. Paketgreifervorrichtung (100) nach einem der vorhergehenden Ansprüche, **dadurch gekennzeichnet, dass** die elastischen Spannelemente (30) durch Gummispannelemente mit je einem Haken (31) am Ende gebildet sind.

10. Paketgreifervorrichtung (100) nach einem der vorhergehenden Ansprüche 2 und 9, **dadurch gekennzeichnet, dass** im Bereich einer Oberkante des jeweiligen oberen Schenkels (21.1) des Paketgreiferelements (21) Aufnahmeösen (23) zum Einhaken der Haken (31) der Spannelemente (30) vorgesehen sind.

11. Paketgreifersystem mit wenigstens einer Paketgreifervorrichtung (100) nach einem der vorhergehenden Ansprüche, und mit einem festen Sockel (210) oder mit einem vertikal beweglichen Stempel (203) als Teil einer Bestückungsvorrichtung (200), auf die das Gestell (10) aufsetzbar ist, wobei die Breite des Sockels (210) oder des Stempels (203) derart in Bezug auf den horizontalen Abstand zwischen den parallelen Paketgreiferelementen (21) gewählt ist, dass diese beim Einführen eines Pakets (1) in den von dem Gestell (10) umgebenen Aufnahmeraum ungehindert vom Sockel (210) oder Stempel (203) nach außen schwenken können.

12. Paketgreifersystem nach Anspruch 11, mit einer Bestückungsvorrichtung (200), die vertikal verschiebbare Betätigungsstifte (201, 202) besitzt, über welche die Paketgreiferelemente (21) gegen das von den vorgespannten Spannelementen (30) ausgeübte Drehmoment nach außen schwenkbar sind und die Bestückungsvorrichtung (200) wenigstens einen von unten zwischen den Paketgreiferachsen (22) durchführbaren Stempel (203) umfasst, über den ein Paket (1) in die Paketgreifervorrichtung (100) einschiebbar ist.
